# EUROPÄISCHE PATENTSCHRIFT

(11) **EP 2 498 621 B1**
(45) Veröffentlichungstag und Bekanntmachung des Hinweises auf die Patenterteilung: **07.10.2015**
(21) Anmeldenummer: 10795911.6
(22) Anmeldetag: 24.08.2010
(51) Int. Cl.: A23K 1/00, A23K 1/14, A23K 1/18, A23L 1/36, A23L 1/025

(54) **METHODE UND VERFAHREN ZUR BEHANDLUNG DER SAMEN VON ÖLSAATEN MITTELS MIKROWELLEN UND PANSENSTABILEN FUTTERFETTEN**
PROCEDURE AND METHOD FOR TREATING OILSEEDS BY MEANS OF MICROWAVES AND RUMEN-STABLE ANIMAL FEED FATS
MÉTHODE ET PROCÉDÉ DE TRAITEMENT DE GRAINES OLÉAGINEUSES PAR MICRO-ONDES ET PAR LES GRAISSES, STABLES DANS LA PANSE

(30) Priorität: 26.08.2009 DE 102009038624
(43) Veröffentlichungstag der Anmeldung: 19.09.2012
(73) Patentinhaber: Agricon Gesellschaft Für Agrar-, Bau- Und Ernährungswirtschaft mbH, 18146 Rostock (DE)
(72) Erfinder: BROCKMANN, Uwe, 18196 Dummerstorf (DE)
(86) Internationale Anmeldenummer: PCT/DE2010/000985
(87) Internationale Veröffentlichungsnummer: WO 2011/023168

(56) Entgegenhaltungen:
- EP-A1- 1 741 347
- DE-A1-102006 040 425
- FR-A1- 2 768 025
- US-A1- 2004 022 928
- PONCET, C.; REMOND, D.; LEPAGE, E.; DOREAU, M.: "Comment mieux valoriser les protéagineux et oléagineux en alimentation des ruminants", FOURRAGES, 7. Juni 2003 (2003-06-07), Seiten 205-229, XP002627325, Gefunden im Internet: URL:http://www.afpf-asso.org/main.php?url= ./fourrages/articles/liste/acces.php&num=1 486 [gefunden am 2011-03-15]
- YU P ET AL: "Ruminal behavior of protein and starch free organic matter of Llupinus albus and Vicia faba in dairy cows", ASIAN-AUSTRALASIAN JOURNAL OF ANIMAL SCIENCES, SUWEON, KR, Bd. 15, Nr. 7, 1. Juli 2002 (2002-07-01), Seiten 974-981, XP008133520, ISSN: 1011-2367

## Beschreibung

### Beschreibung der Erfindung

Die Samen der Ölsaaten enthalten für Menschen und Tiere wertvolle ungesättigte Fettsäuren sowie weitere ernährungsphysiologisch bedeutsame Inhaltstoffe wie essentielle Aminosäuren, Mineral- und Ballaststoffe.

Ölsaaten, wie Leinsaat, Rapssaat, Baumwollsaat, Erdnüsse, Sojabohnen, Sesamsaat, Sonnenblumensaat, Saflorsaat und Chiasaat können als Futtermittel zur Produktion von Milch, Fleisch und Eiern verwendet werden. Dadurch wird die Tiergesundheit verbessert und die Qualität der Erzeugnisse erhöht. Durch gezielte Fütterung an landwirtschaftliche Nutztiere ist eine signifikante Änderung der Fettsäurezusammensetzung von tierischen Produkten und damit des ernährungsphysiologischen Wertes für die menschliche Ernährung möglich.

Native Samen von Ölsaaten besitzen eine feste Samenschale, die vor allem aus schwerverdaulichen Ballaststoffen besteht. Die Fette sind in den Pflanzenzellen unterhalb der Samenschale eingelagert. Ohne Zerkleinerung der Samen werden die wertvollen Inhaltsstoffe während der normalen Verdauung nicht aufgeschlossen oder nur langsam freigesetzt und deshalb unzureichend verdaut.

Die Fütterung von Nutztieren mit nativer Ölsaat, insbesondere an Wiederkäuer, führt dazu, dass die Samen nach der Futteraufnahme unzerkleinert in den ventralen Pansenbereich absinken. Ohne wiedergekaut worden zu sein, passieren sie nach kurzer Verweildauer im Pansen den Blättermagen, den Labmagen und den Darm. Aus diesem Grund werden Ölsaaten an Wiederkäuer wie Rinder, Ziegen und Schafe vor allem gemahlen, abgepresst, extrudiert oder mikronisiert verfüttert. Diese Behandlungen verbessern die Verdaulichkeit im Vergleich zur Verfütterung unbehandelter Samen, weil die Gefahr besteht, dass native Samen den Dünndarm unverdaut passieren und ohne Resorption der wertvollen Bestandteile wieder ausgeschieden werden.

Nach heutigem Stand der Technik werden zum Auftrennen der Inhaltsstoffe aus Ölsaaten für die Herstellung von Tierfutter die Samen gemahlen, gequetscht oder abgepresst. Modernere technische Verfahren zur Aufbereitung von Ölsaaten als Futtermittel stellen die Extrusion und Mikronisierung dar. Die Extrusion ist ein Verfahren, bei dem nach hydrothermischer Behandlung ein wässriger Teig unter hohem Druck durch eine Düse gepresst wird. Beim Austritt aus der Düse wird Wasserdampf frei und das Produkt wird gelockert. Die Mikronisierung ist ein Hochdrucksprühverfahren, bei dem Feststoffe unter Druck- und Temperaturerhöhung durch eine Düse gepresst und dabei stark zerkleinert werden.

Der Nachteil dieser Behandlungen ist, dass die enthaltenen wertvollen Fette nach Verfütterung an Wiederkäuer im Pansen einem raschen Um- und Abbau unterliegen. Ein hoher Anteil der ungesättigten Fettsäuren wird im Pansen hydriert und damit gesättigt. Das betrifft auch die in Ölsaaten enthaltenen Omega-3-Fettsäuren. Durch die direkte Freisetzung von Fettsäuren im Pansen können außerdem die Nährstoffverwertung und die Faserverdauung negativ beeinflusst und eine Verringerung der Futteraufnahme bewirkt werden. (Dohme, 32. Viehwirtschaftliche Fachtagung 13. - 14. April 2005)

Das von Howard McKinney et.al. in US-Patent Nr. 4,015,341 beschriebene Verfahren zur Trocknung der Samen von Ölsaaten mittels Mikrowellen mit einer Frequenz von 915 MHz und 2450 MHz bei Temperaturen von etwa 47 bis 53°C unter reduziertem Druck, bzw. das Verfahren zur Trocknung von Frederick Wear et.al. US-Patent Nr. 4,347,670 bei einem Frequenzbereich von 100 MHz bis 10 GHz unter Vakuum haben im Gegensatz zu der vorliegenden Erfindung die Verbesserung der Lagerfähigkeit von Saaten zum Ziel.

Neuere Untersuchungen zur Behandlung von Rapssamen mittels Mikrowellen als Vorbehandlung für die Ölextraktion konnten in Abhängigkeit von der Behandlungstemperatur und Leistung einen Anstieg des Ertrages an abgepresstem Öl nachweisen. (OBERNDORFER, C., LÜCKE, W.: The Effect of Rapeseed Treatment by Microwave and Radio-Frequency Application on Oil Extraction and Oil Quality. Part. I: Influence on Mechanical Oil Extraction. In: Fett/Lipid, Vol. 101,1999, Nr. 5, S. 164-167.). Die dabei durchgeführten mikroskopischen Untersuchungen ergaben mikrostrukturelle Veränderungen der behandelten gegenüber den unbehandelten Proben. Das Verfahren nach Gary Derks US-Patent Nr. 2004/022928 A1 nutzt diesen Effekt einer Mikrowellenbehandlung für eine nachfolgende Sättigung der Samen mit stickstoffhaltigen Lösungen, die allgemein eine Dichte von 1,1 g/cm³ haben (US 2004/022928 A1 (Derks Gary [CA]) 5. Februar 2004).

Dickey et.al. fanden bei der Vorbehandlung von Maiskeimen mittels Mikrowellen ebenfalls einen höheren Ölertrag beim Pressen und mikrostrukturelle Veränderungen der Proben durch die Vorbehandlung (DICKEY , L.C. et.al.: Using Microwave Heating and Microscopy to Estimate Optimal Com Germ Oil Yield with a Bench-Scale Press. In: J. Am. Oil Chem. Soc., Vol. 84, 2007, S. 489 - 495.).

Die Verfahren nach Lawes Woodford et.al. GB-Patent Nr. 2113521 A und Alfred Benton US-Patent Nr. 6,787,150 B2 beschreiben die Ummantelung von Futtermitteln mit pansenstabilen Futterfetten zum Schutz der wertvollen Bestandteile vor mikrobiellen Ab- und Umbauprozessen im Pansen. Eine vergleichbare Wirkung wird mit dem im EP-Patent Nr. 1 741 347 A1 von Bio Science Co., LTD. beschriebenen Verfahren angestrebt (EP 1 741 347 A1 (Bio Science Co., LTD [JP]) 10. Januar 2007).

Bei der Überprüfung dieser Art der Behandlung konnte Kowalski allerdings unter Verwendung einer Kalziumseife auf der Basis von Rapsfett zur Ummantelung von Sojabohnenmehl nicht die dadurch erwartete Verbesserung des Schutzes der ungesättigten Fettsäuren vor der Hydrierung im Pansen zeigen (KOWALSKI, Z.M.: Rumen Fermentation, Nutrient Flow to the Duodenum and Digestibility in Bulls Fed Calcium Soaps of Rapeseed fatty acids and Soja Bean Meal Coated with Calcium Soaps. In: Anim. Feed Sci. Technol., Vol. 69, 1997, S 289-303.).

Die Kombination von Mikrowellenbehandlung und einer Ummantelung mit pansenstabilen Fetten birgt das Potential die jeweiligen Vorteile der Behandlungen in einem Verfahren zu vereinen.

Durch Einsatz der in dieser Erfindung beschrieben Methode soll erreicht werden, dass ein möglichst hoher Anteil ungesättigter Fettsäuren der Samen von Ölsaaten den Dünndarm erreicht und dort verdaut und resorbiert wird. Im Gegensatz zu den zuvor beschriebenen Verfahren zur Behandlung von Futtermitteln sollen in dem vorliegenden beschriebenen Verfahren die physiologischen Verdauungsvorgänge der Wiederkäuer berücksichtigt werden. Speziell für Wiederkäuer ist der physiologische Wiederkauvorgang für einen effizienten Aufschluss der Nährstoffe nützlich. Das beschriebene Verfahren zur Behandlungen der Samen von Ölsaaten führt dazu, dass diese nach der Futteraufnahme in der Pansenflüssigkeit schwimmen oder schweben und zusammen mit den faserreichen Futterteilen aufgestoßen und wiedergekaut werden können. Des Weiteren sieht die Methode vor, Inhaltsstoffe der Samen durch Coating vor Ab- und Umbauvorgängen im Pansen zu schützen.

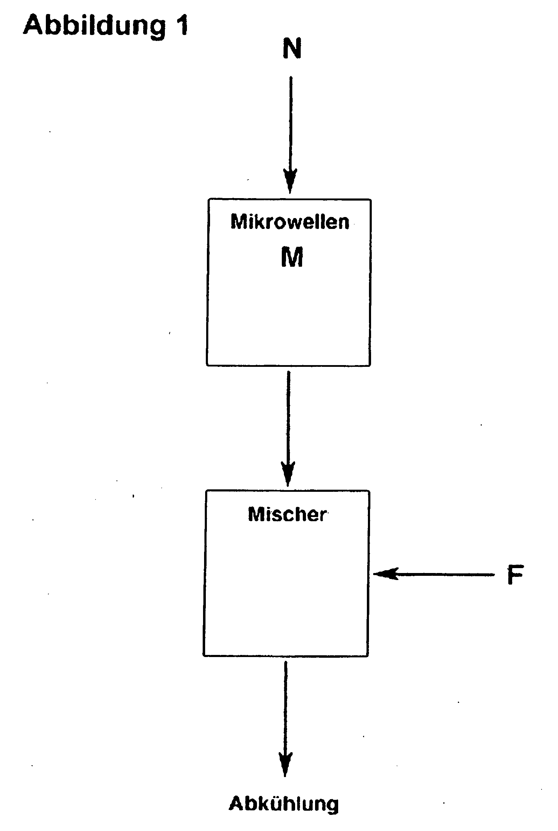

Im Schritt 1 des Verfahrens werden die nativen Samen von Ölsaaten (Abb. 1, N) mittels Mikrowellen (Abb. 1, M) in einem Frequenzbereich von 300 MHz bis 300 GHz und einer Leistung von bis zu 12 kW auf eine Temperatur von bis zu 120 Grad Celsius erhitzt. Durch direkte Umwandlung elektromagnetischer Energie in kinetische Energie der Wassermoleküle wird in den Samen Wärme erzeugt. Das darin enthaltene Wasser wird erhitzt und verdampft. Der Wasserdampf tritt durch die Poren und Öffnungen der Samenschale aus, wodurch die Samenschale aufbrechen kann. Die Verdampfung des Wassers führt zur Senkung des Wassergehaltes der Samen und zu einer Reduzierung der Dichte. Die Behandlungsdauer ist dem Wassergehalt der Samen anzupassen mit dem Ziel eine Gesamtdichte von weniger als 1 g/cm³ zu erreichen.

Im Schritt 2 werden die durch Mikrowellen behandelten und erhitzten Samen mit pansenstabilem Fett gleichmäßig vermischt (Abb. 1, F). Ein Teil des Fettes schmilzt an der heißen Oberfläche der Samen und ummantelt diese während der Abkühlung in Schritt 3.

Die in Schritt 1 beschriebene Behandlung führt zu einer guten Schwimmfähigkeit der behandelten Samen im Pansensaft und ermöglicht somit die Zerkleinerung der Samen durch das Wiederkauen.

Im Ergebnis der Schritte 2 und 3 wird die Schwimmfähigkeit infolge der Fettummantelung (Coating) verbessert. Außerdem werden die Inhaltsstoffe vor Ab- und Umbauprozessen im Pansen geschützt.

Durch das Wiederkauen der behandelten Samen zusammen mit den in der Schwimmschicht des Panseninhaltes enthaltenen faserreichen Futterpartikeln erfolgt eine mechanische Zerkleinerung der Samen. Dadurch werden die Nährstoffe der Verdauung zugänglich gemacht und die Passage in den Labmagen und den Dünndarm, wo die Nährstoffe verdaut und resorbiert werden können, beschleunigt.

### Ausführungsbeispiele

In einer Versuchsreihe mit drei Wiederholungen wurden die Einflüsse der oben beschriebenen Schritte 1 und 2 auf die Schwimmfähigkeit von Leinsaat und Rapssaat in Wasser im Vergleich zu nativen Samen bewertet.

Für native Samen von Leinsaat und Rapssaat gelten die nachfolgenden mittleren Rohnährstoffgehalte in g/kg Trockenmasse:

| | Leinsaat | Rapssaat |
|---|---|---|
| Rohasche | 47 | 45 |
| Rohprotein | 249 | 227 |
| Rohfett | 366 | 444 |
| Rohfaser | 71 | 75 |
| N-Freie-Extraktstoffe | 267 | 209 |

Quelle: Jeroch, H., W. Drochner, O. Simon (2008) Ernährung landwirtschaftlicher Nutztiere, Verlag Eugen Ulmer Stuttgart

### Beispiel 1

Der mittlere Feuchtegehalt von Leinsamen liegt bei 12 Prozent.

Leinsaat gilt wegen der hohen Quellfähigkeit seiner Schleimstoffe in der Samenschale und der Wasserbindekapazität der Nicht-Stärke-Kohlenhydrate mit der daraus resultierenden Ballastwirkung als Diätfuttermittel. Diese Fähigkeiten besitzt Rapssaat nicht.

Die Samen wurden in einem Mikrowellengerät (2450 MHz und 600 Watt) über eine Dauer von 60 Sekunden behandelt. Ein Teil der im Mikrowellengerät 60 Sekunden behandelten und dabei auf 115°C erhitzten Samen wurden unmittelbar nach der Erhitzung mit einem pansenstabilen Kalzium-Fett (Handelsname Nurisol®) bis zur Sättigungsgrenze intensiv vermischt.

Nach einer Abkühldauer von 40 Minuten wurden die Samen der einfachen und doppelten Behandlungsvariante sowie eine Kontrolle nativer Samen mit abgekochtem und auf 25°C herunter gekühltem Wasser aufgefüllt und verrührt.

Die Leinsamen waren im Wasser in folgenden relativen Anteilen schwimmfähig:

| | | Dauer in Minuten | | | | |
|---|---|---|---|---|---|---|
| | | 0 | 30 | 60 | 90 | 120 |
| unbehandelt | % | 13 | 8 | 8 | 8 | 5 |
| Mikrowellen | % | 56 | 13 | 9 | 7 | 5 |
| Mikrowellen + Fett | % | 86 | 84 | 79 | 74 | 73 |

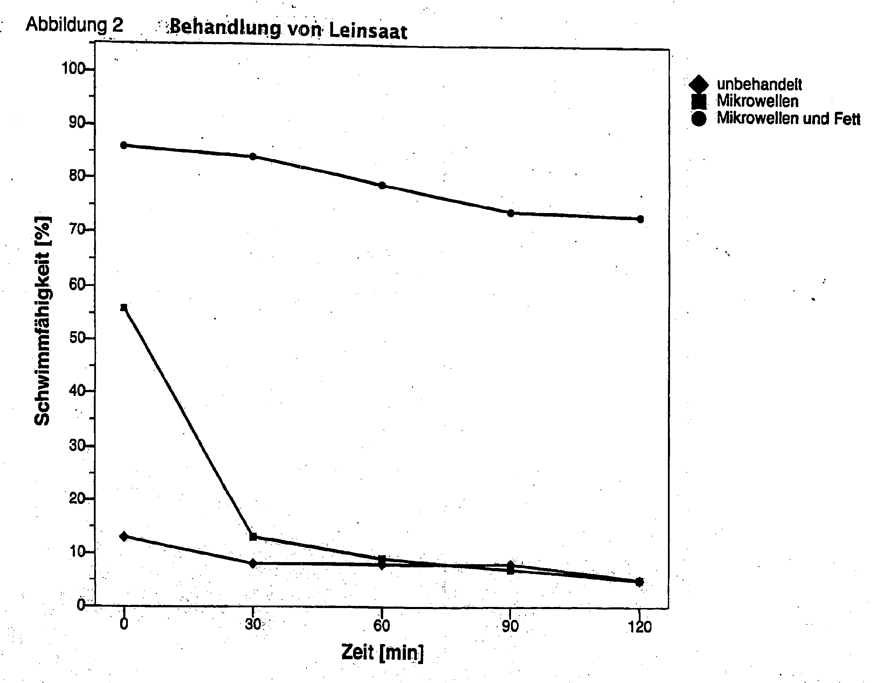

Während die Schwimmfähigkeit der Leinsamen nach Mikrowellenbehandlung (Schritt 1) zu Beginn 56 Prozent betrug, war sie nach 30 Minuten stark abgesunken und erreichte nach 60 Minuten annähernd das Niveau der nativen, unbehandelten Samen in Höhe von 8 Prozent (Abbildung 2). Dem gegenüber lag die Schwimmfähigkeit der mit Mikrowellen behandelten und pansenstabilem Kalzium-Fett vermischten bzw. gecoateten Samen (gemäß Schritt 2 und 3) nach 120 Minuten noch bei 73 Prozent.

Die alleinige Mikrowellenbehandlung der Leinsamen bewirkte durch die Reduzierung des Wassergehaltes und das Aufbrechen der Samenschale zu Beginn eine gute Schwimmfähigkeit. Danach verbesserte sich jedoch die Quellfähigkeit und Wasseraufnahme, wodurch die Schwimmfähigkeit abnahm.

### Beispiel 2

Entsprechend der Behandlung von Leinsaat konnte auch für Rapssaat die Wirksamkeit des Verfahrens gezeigt werden.

Der mittlere Feuchtegehalt von Rapssaat liegt bei 9 Prozent.

Die Rapssamen waren im Wasser in folgenden relativen Anteilen schwimmfähig:

| | Dauer in Minuten | | | | | |
|---|---|---|---|---|---|---|
| | | 0 | 30 | 60 | 90 | 120 |
| unbehandelt | % | 10 | 4 | 4 | 2 | 2 |
| Mikrowellen | % | 72 | 72 | 72 | 69 | 69 |
| Mikrowellen + Fett | % | 95 | 96 | 96 | 94 | 94 |

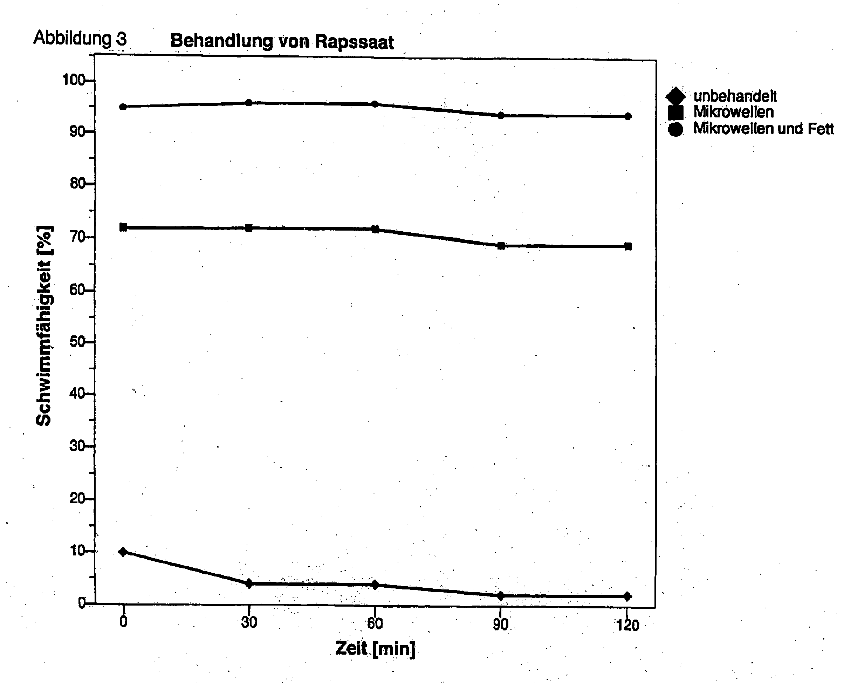

Die Schwimmfähigkeit der Rapssaat erreichte nach Mikrowellenbehandlung (Schritt 1) ein Niveau von 72 und betrug nach 120 Minuten 69 Prozent (Abb. 3).

Ein vergleichbar stabiler Verlauf auf höherem Niveau ergab sich für die Behandlung mittels Mikrowelle und Vermischung mit pansenstabilem Kalzium-Fett (Schritte 1, 2 und 3). Die Schwimmfähigkeit erreichte zu Beginn 95 und betrug nach 120 Minuten 94 Prozent.

Die zusätzliche Behandlung mit pansenstabilem Futterfett bewirkte in beiden Ausführungsbeispielen die höchste prozentuale Schwimmfähigkeit.

## Patentansprüche

1. Verfahren zur Behandlung der Samen von Ölsaaten gemäß folgenden Schritten:
(a) Reduzierung des Wassergehalts und der Dichte der Samen auf einen Wert von weniger als 1 g/cm³ durch Erhitzung der Samen auf eine Temperatur von bis zu 120°C mittels Mikrowellen mit einer Frequenz zwischen 300 MHz und 300 GHz.
(b) Ummantelung der nach (a) behandelten, erhitzten Samen mit pansenstabilem Fett durch Vermengung mit diesem zur Verbesserung der Schwimmfähigkeit.

2. Verfahren nach Anspruch 1, **dadurch gekennzeichnet, dass** die Mikrowellen eine Leistung von bis zu 12 kW übertragen.

3. Verfahren nach Anspruch 1, **dadurch gekennzeichnet, dass** es sich um Samen von Leinsaat, Rapssaat, Baumwollsaat, Erdnüsse, Sojabohnen, Sesamsaat, Sonnenblumensaat, Saflorsaat und Chiasaat handelt.

4. Verwendung von, nach dem Verfahren von Anspruch 1 erhaltenen, ummantelten Samen zur Herstellung von Tierfutter.

5. Verwendung nach Anspruch 4, **dadurch gekennzeichnet, dass** es sich um Tierfutter für Wiederkäuer handelt.

## Claims

1. A method of treating the seeds of oilseeds according to the following steps:
(a) Reduction of the water content and density of the seeds to a value less than 1 g/cm³ by heating the seeds to a temperature of up to 120 °C by means of microwaves having a frequency between 300 MHz and 300 GHz.
(b) Sheathing of heated seeds, treated according to (a), with rumen-stable feed fat by blending therewith to improve the buoyancy.

2. A method according to claim 1, characterized thereby that microwaves transmit a power of up to 12 kW.

3. A method according to claim 1, characterized thereby that treated seeds are linseed, rapeseed, cottonseed, peanuts, soybeans, sesame seeds, sunflower seed, safflower seed and/or chiasaat.

4. Use of the seeds, treated according to a method as described in claim 1, for the production of animal feed.

5. Use of the seeds according to claim 4, characterized thereby that it is animal feed for ruminants.

## Revendications

1. Procédé de traitement des graines d'oléagineux, selon les étapes suivantes:
(a) Réduction de la teneur en eau et de la densité des graines à une valeur moins que 1 g/cm³ par chauffage des graines à une température allant jusqu'à 120 °C au moyen de micro-ondes ayant une fréquence comprise entre 300 MHz et 300 GHz.
(b) Enrobage selon (a) des graines traitées encore chaudes avec de la graisse stabilisateur de panse par mélange avec celui-ci pour améliorer la flottabilité.

2. Procédé selon la revendication 1, **caractérisé par** la transmission de puissance jusqu'à 12 kW par le four micro-ondes.

3. Procédé selon la revendication 1, **caractérisé par le fait qu'**il s'agit de graines de lin, de colza, de coton, d'arachides, de soja, de sésame, de tournesol, de carthame et/ou de Chia.

4. Utilisation selon le procédé de la revendication 1, des Graines obtenues et enrobées, pour la production d'aliments pour animaux.

5. Utilisation selon la revendication 4, **caractérisés par le fait qu'**il s'agit d'aliments destinés aux animaux ruminants.
